# EUROPÄISCHE PATENTSCHRIFT

(11) **EP 1 559 908 B1**
(45) Veröffentlichungstag und Bekanntmachung des Hinweises auf die Patenterteilung: **08.11.2006**
(21) Anmeldenummer: 04105849.6
(22) Anmeldetag: 17.11.2004
(51) Int. Cl.: F02M 63/02, F02M 51/06, F02M 61/16, F02M 59/46

(54) **Integrierter hydraulischer Druckübersetzer für Kraftstoffinjektoren an Hochdruckspeichereinspritzsystemen.**
Common Rail fuel injector with integrated hydraulic pressure amplifier
Injecteur de carburant pour système à rampe commune avec amplificateur hydraulique de pression intégré

(30) Priorität: 27.01.2004 DE 102004004006
(43) Veröffentlichungstag der Anmeldung: 03.08.2005
(73) Patentinhaber: ROBERT BOSCH GMBH, 70442 Stuttgart (DE)
(72) Erfinder: Boecking, Friedrich, 70499, Stuttgart (DE)

(56) Entgegenhaltungen:
- WO-A1-20/04111434
- DE-C1- 4 306 073
- DE-C1- 10 060 836
- PATENT ABSTRACTS OF JAPAN Bd. 1999, Nr. 01, 29. Januar 1999 (1999-01-29) -& JP 10 288117 A (NISSAN MOTOR CO LTD), 27. Oktober 1998 (1998-10-27)

## Beschreibung

### Technisches Gebiet

Zum Einspritzen von Kraftstoff in direkteinspritzende Verbrennungskraftmaschinen können hubgesteuerte Hochdruckspeichereinspritzsysteme (Common Rail) eingesetzt werden. Diese Kraftstoffeinspritzsysteme zeichnen sich dadurch aus, dass der Einspritzdruck an Last und Drehzahl der Verbrennungskraftmaschine angepasst werden kann. Zur Reduzierung der Emissionen und zur Erzielung hoher spezifischer Leistungen ist ein hoher Einspritzdruck erforderlich. Da das erreichbare Druckniveau in Hochdruckkraftstoffpumpen aus Festigkeitsgründen begrenzt ist, kann eine weitere Drucksteigerung bei Hochdruckspeichereinspritzsystemen (Common Rail) über Druckübersetzer an Kraftstoffinjektoren erzielt werden.

### Stand der Technik

DE 101 23 913 offenbart eine Kraftstoffeinspritzeinrichtung für Brennkraftmaschinen mit einem von einer Kraftstoffhochdruckquelle versorgbaren Kraftstoffinjektor. Zwischen dem Kraftstoffinjektor und der Kraftstoffhochdruckquelle ist eine einen beweglichen Druckübersetzerkolben aufweisende Druckübersetzungseinrichtung geschaltet. Deren Druckübersetzerkolben trennt einen an die Kraftstoffhochdruckquelle anschließbaren Raum von einem mit dem Kraftstoffinjektor verbundenen Hochdruckraum. Durch Befüllen eines Rückraumes der Druckübersetzungseinrichtung mit Kraftstoff beziehungsweise durch Entleeren des Rückraumes von Kraftstoff kann der Kraftstoffdruck im Hochdruckraum variiert werden. Der Kraftstoffinjektor weist einen beweglichen Schließkolben zum Öffnen und Verschließen von Einspritzöffnungen auf, wobei der Schließkolben in einen Schließdruckraum hineinragt. Der Schließkolben ist mit Kraftstoffdruck zur Erzielung einer in Schließrichtung auf den Schließkolben wirkenden Kraft beaufschlagbar. Der Schließdruckraum und der Rückraum werden durch einen gemeinsamen Schließdruck-Rückraum gebildet, wobei sämtliche Teilbereiche des Schließdruck-Rückraumes permanent zum Austausch von Kraftstoff miteinander verbunden sind. Es ist ein Druckraum zum Versorgen der Einspritzöffnungen mit Kraftstoff und zum Beaufschlagen des Schließkolbens mit einer in Öffnungsrichtung wirkenden Kraft vorgesehen. Der Hochdruckraum steht derart mit der Kraftstoffhochdruckquelle in Verbindung, dass im Hochdruckraum abgesehen von Druckschwingungen ständig zumindest der Kraftstoffdruck der Kraftstoffhochdruckquelle anliegen kann. Der Druckraum und der Hochdruckraum werden durch gemeinsamen Einspritzraum gebildet, dessen Teilbereiche permanent zum Austausch von Kraftstoff miteinander verbunden sind.

Aus DE 43 06 073 A ist ein Kraftstoffinjektor bekannt, bei dem ein Piezo-Aktor mit einem Übersetzerkolben verbunden ist, der in einen ersten Steuerraum drückt. Im Übersetzerkolben ist ein weiteres Kolbenteil geführt, das durch den vom Übersetzerkolben erzeugten erhöhten Druck im Steuerraum eine entgegengesetzt zum Hub des Übersetzerkolbens gerichtete Hubbewegung ausführt, durch die die Düsennadel von einem Düsennadelsitz abgehoben wird. Dem weiteren Kolbenteil ist ein rückwärtiger zweiter Steuerraum zugeordnet, der gegenüber dem ersten Steuerraum fluiddicht ist und lediglich eine hydraulische Ausgleichsverbindung zu einem weiteren hydraulischen Raum besitzt. Dadurch entsteht eine Hubumkehr bei drückendem Piezo-Aktor bezogen auf den Hub der Düsennadel.

Aus DE 100 60 836 C1 ist weiterhin ein druckgesteuerter Common Rail-Injektor mit gestuftem Öffnungs- und Schließverhalten bekannt. In einem Injektorgehäuse ist ein Ventilkörper bewegbar aufgenommen, an welchem ein Schieberbereich ausgebildet ist. Der Ventilkörper umfasst ferner einen mit einer gehäuseseitig ausgeführten Sitzfläche zusammenwirkenden Sitzdurchmesser, über den ein Düsenzulauf zu einem Düsenraum einer Einspritzdüse freigebbar oder verschließbar ist. Der Ventilkörper gemäß dieser Lösung ist als 4/3-Wege-Steuerventil ausgebildet, über dessen Schieberbereich ein den Hub einer Düsennadel beeinflussender Steuerraum steuerbar ist.

### Darstellung der Erfindung

Der erfindungsgemäß vorgeschlagene Kraftstoffinjektor weist zwei durch die beiden miteinander zusammenwirkenden Übersetzerkolben begrenzte Steuerräume auf, die untereinander über eine sich durch den zweiten Übersetzerkolben, ausgebildet an einem Einspritzventilglied oder an einer Druckstange, durchziehenden Kanal hydraulisch miteinander in Verbindung stehen. Dadurch wird eine kompakte, selbstzentrierende Konfiguration erreicht.

Dazu ist einer der Übersetzerkolben unmittelbar über einen Aktor betätigbar, während ein weiterer Übersetzerkolben beispielsweise durch einen Übersetzerkolbenbereich an einem nadelförmigen Einspritzventilglied gebildet ist. Der durch den Aktor betätigte Übersetzerkolben kann gemäß einer ersten Ausführungsvariante unmittelbar in einem Führungsabschnitt des Injektorgehäuses geführt werden, während gemäß einer zweiten Ausführungsvariante am durch den Aktor betätigten Übersetzerkolben eine druckfederbeaufschlagte Steuerraumhülse aufgenommen sein kann.

Der mit dem Aktor verbundene erste Übersetzerkolben ist glockenförmig ausgebildet und umgreift einen am Einspritzventilglied oder an einer Druckstange, die mit dem Einspritzventilglied zusammenwirkt, ausgebildeten zweiten Übersetzerkolbenteil. Der glockenförmig ausgebildete erste Übersetzerkolben ist somit auf dem zweiten, am Einspritzventilglied oder an einer Druckstange ausgebildeten Übersetzerkolben zentriert.

In einer ersten Ausführungsvariante ist der erste Steuerraum durch die beiden ineinandergeführten Übersetzerkolben begrenzt und der zweite Steuerraum durch eine Stirnfläche des ersten Übersetzerkolbens und dem Injektorgehäuse begrenzt. In einer zweiten Ausführungsvariante der erfindungsgemäß vorgeschlagenen Übersetzeranordnung wird der erste Steuerraum analog zur ersten Ausführungsvariante durch die beiden ineinandergeführten Übersetzerkolben begrenzt, während der zweite Steuerraum durch eine am ersten Übersetzerkolben federnd gelagerte Steuerraumhülse begrenzt ist. Eine Beißkante der federnd gelagerten Steuerraumhülse wirkt mit dem ringförmig konfigurierten Boden des zweiten Steuerraumes zusammen.

Beiden Ausführungsvarianten ist gemeinsamen, dass der erste Übersetzerkolben am zweiten Übersetzerkolben zentriert wird und dass sich eine extrem kompaktbauende Ausführung eines hydraulischen Übersetzers erreichen lässt, der insbesondere zur Betätigung von Kraftstoffinjektoren, die über einen Piezosteller angesteuert werden, eingesetzt werden kann.

### Zeichnung

Anhand der Zeichnung wird die Erfindung nachstehend eingehender beschrieben.

Es zeigt:
- Figur 1: eine erste Ausführungsvariante des erfindungsgemäß vorgeschlagenen hydraulischen Übersetzers mit ineinandergeführten Übersetzerkolben und
- Figur 2: eine zweite Ausführungsvariante der erfindungsgemäß vorgeschlagenen hydraulischen Übersetzungsanordnung mit an einem der Übersetzerkolben aufgenommener druckfederbeaufschlagter Steuerraumhülse.

### Ausführungsvarianten

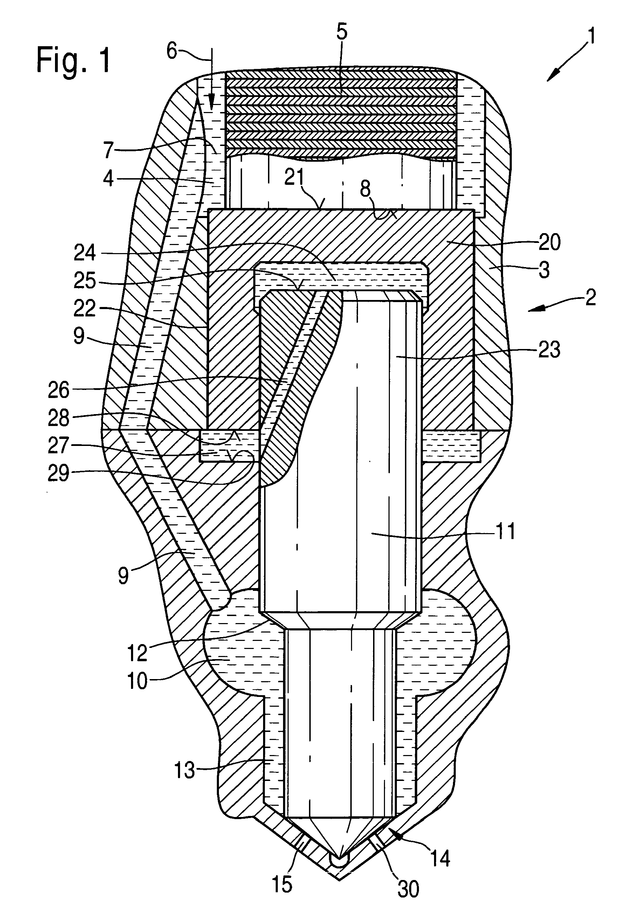

Figur 1 ist eine erste Ausführungsvariante der erfindungsgemäß vorgeschlagenen hydraulischen Übersetzungseinrichtung zu entnehmen, bei welcher ein piezobetätigter erster Übersetzerkolben unmittelbar im Gehäuse eines Kraftstoffinjektors geführt ist.

Der in Figur 1 dargestellte Kraftstoffinjektor 1 umfasst einen Druckübersetzer 2. Der Druckübersetzer 2 ist im Gehäuse 3 des Kraftstoffinjektors 1 ausgebildet. Der Druckübersetzer 2 umfasst einen ersten Übersetzerkolben 20, der durch einen Übersetzerkolbenteil 23 eines Einspritzventilgliedes 11 zentriert wird. Der glockenförmig ausbildbare erste Übersetzerkolben 20 ist in einer Gehäuseführung 22 im Gehäuse 3 direkt geführt. Der erste Übersetzerkolben 20 ist an seiner ersten Stirnfläche 21 durch einen Aktor 5 beaufschlagt. Der Aktor 5 kann insbesondere als Piezoaktor ausgebildet sein, der in einem im Gehäuse 3 des Kraftstoffinjektors 1 ausgebildeten Hohlraum 4 aufgenommen ist. Der Hohlraum 4 wird über einen in Figur 1 nur schematisch angedeuteten Zulauf 6 mit unter Systemdruck stehendem Kraftstoff beaufschlagt. Der Zulauf 6 seinerseits ist mit einem in Figur 1 nicht dargestellten Hochdruckspeichervolumen (Common Rail) verbunden, in welchem das Systemdruckniveau mittels einer Hochdruckkraftstoffpumpe erzeugt und aufrechterhalten wird. Der im Hohlraum 4 innerhalb des Gehäuses 3 des Kraftstoffinjektors 1 vorhandene Kraftstoff ist durch Bezugszeichen 7 angedeutet. Der Aktor 5 beaufschlagt mit seiner Stirnfläche 8 die bereits erwähnte erste Stirnfläche 21 des beispielsweise glockenförmig ausgebildeten ersten Übersetzerkolbens 20.

Vom Hohlraum 4 innerhalb des Gehäuses 3 des Kraftstoffinjektors 1 zweigt ein Düsenzulauf 9 zu einem Düsenraum 10 ab. Der Düsenraum 10 ist innerhalb des Gehäuses 3 des Kraftstoffinjektors 1 ausgebildet und mündet in einen Ringspalt 13, über welchen unter Systemdruck stehender Kraftstoff Einspritzöffnungen 30 zuströmt, die unterhalb des brennraumseitigen Sitzes 14 des Einspritzventilgliedes 11 angeordnet sind. Über die Einspritzöffnungen 30 wird Kraftstoff in einen nicht dargestellten Brennraum einer Verbrennungskraftmaschine eingespritzt. Im Bereich des Düsenraumes 10 ist am Einspritzventilglied 11 eine Druckstufe 12 ausgebildet. Die Druckstufe 12 bildet eine hydraulisch wirksame Fläche, an welcher bei Beaufschlagung des Düsenraumes 10 mit unter hohem Druck stehender Kraftstoff eine Kraft in Öffnungsrichtung des Einspritzventilgliedes 11 angreift.

Der glockenförmig ausbildbare erste Übersetzerkolben 20 des Druckübersetzers 2 ist an seiner ersten Stirnfläche 21 durch den Aktor 5 beaufschlagt. Der erste Übersetzerkolben 20 ist innerhalb einer Gehäuseführung 22 im Gehäuse 3 geführt und weist eine zweite Stirnfläche 28 auf. Zwischen dem ersten Übersetzerkolben 20 und dem entweder am Einspritzventilglied 11 ausbildbaren Kolbenteil 23, oder an einem auf das Einspritzventilglied 11 wirkenden Druckstange ausbildbaren Kolbenteil 23 wird ein erster Steuerraum 24 gebildet. Von der steuerraumseitigen Stirnfläche 25 des Kolbenteils 23 erstreckt sich ein Durchgangskanal 26, der innerhalb eines weiteren, zweiten Steuerraumes 27 mündet. Der weitere, zweite Steuerraum 27 wird einerseits durch die zweite Stirnfläche 28 des glockenförmig konfigurierten ersten Übersetzerkolbens 20 und eine ringförmig ausgebildete Bodenfläche 29 des Gehäuses 3 begrenzt.

Bei Bestromung des vorzugsweise als Piezoaktor ausbildbaren Aktors 5 längt sich dessen Piezokristallstapel, so dass der erste Übersetzerkolben 20 an seiner ersten Stirnseite 21 mit einer in Schließrichtung wirkenden Kraft beaufschlagt wird. Aufgrund dessen steigt der Druck im ersten Steuerraum 24. Da dieser über den Durchgangskanal 26 mit dem zweiten Steuerraum 27 in Verbindung steht, herrscht in beiden Steuerräumen 24 beziehungsweise 27 der gleiche, in Bezug auf den Systemdruck erhöhte Druck. Dadurch wird das Einspritzventilglied 11 oder eine mit diesem in Verbindung stehende Druckstange in Schließrichtung beaufschlagt. Das Einspritzventilglied 11 wird in seinen brennraumseitigen Sitz 14 gestellt, so dass die Einspritzöffnungen 15, 30 am brennraumseitigen Ende des Einspritzventilgliedes 11 verschlossen sind. Der über den Düsenzulauf 9, den Düsenraum 10 und den Ringspalt 13 anstehende, unter Systemdruck stehende Kraftstoff erreicht die durch das Einspritzventilglied 11 verschlossenen Einspritzöffnungen nicht, so dass kein Kraftstoff in den Brennraum der Verbrennungskraftmaschine eingespritzt werden kann.

Wird hingegen die Bestromung des vorzugsweise als Piezoaktor ausbildbaren Aktors 5 aufgehoben, nimmt der Piezokristallstapel des Aktors 5 seine ursprüngliche Länge an, so dass der glockenförmig ausbildbare erste Übersetzerkolben 20 nach oben auffährt, d.h. es erfolgt eine Relativbewegung des ersten Übersetzerkolbens 20 entlang des Führungsabschnittes 22 relativ zum Ventilgehäuse 3. Aufgrund dessen sinkt der Druck im ersten Steuerraum 24; ebenso nimmt der Druck im zweiten Steuerraum 27 ab, da die zweite Stirnfläche 28 des ersten Übersetzerkolbens 20 aus diesem auffährt. Die an der Druckstufe 12 des Einspritzventilgliedes 11 im Bereich des Düsenraumes 10 angreifende, in Öffnungsrichtung wirkende Kraft öffnet das Einspritzventilglied 11, so dass dessen brennraumseitiger Sitz 14 geöffnet wird. Über den Hochdruckzulauf 6, den Hohlraum 4, den Düsenzulauf 9, den Düsenraum 10 und den Ringspalt 13 zuströmender, unter Systemdruck stehender Kraftstoff kann nunmehr bei geöffnetem, brennraumseitigen Sitz 14 des Einspritzventilgliedes 11 über die Einspritzöffnungen 15, 30 in den Brennraum der Verbrennungskraftmaschine eingespritzt werden.

Die erste Ausführungsvariante des erfindungsgemäß vorgeschlagenen hydraulischen Übersetzers zeichnet sich einerseits durch eine geringe Bauhöhe aus und andererseits dadurch, dass nur eine Gehäuseführung 22 im Injektorgehäuse 3 benötigt wird. Mit der erfindungsgemäß vorgeschlagenen Anordnung lässt sich ein Einspritzventilglied 11 direkt steuern, wobei der erste Übersetzerkolben 20 auf dem Kolbenteil 23 entweder des Einspritzventilgliedes 11 oder einer mit dieser zusammenwirkenden Druckstange zentrierbar ist.

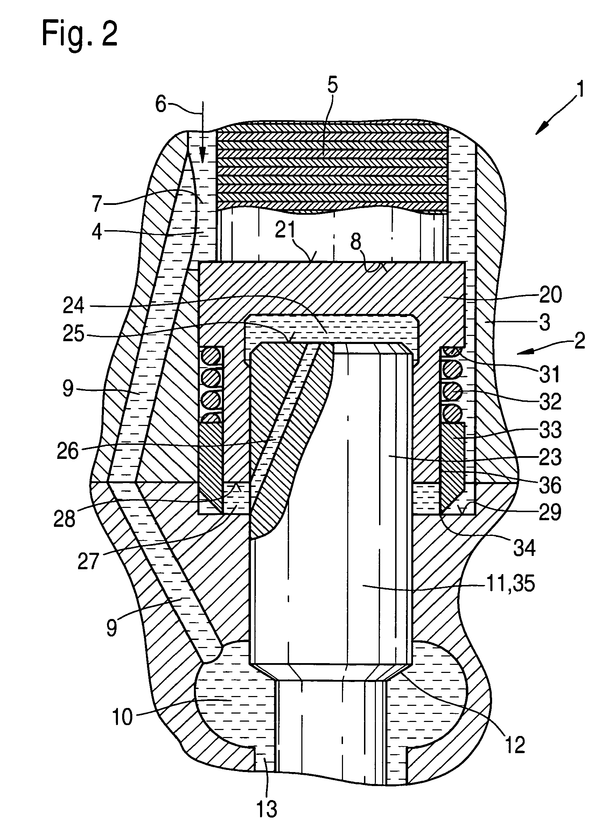

Figur 2 zeigt eine weitere Ausführungsvariante des erfindungsgemäß vorgeschlagenen hydraulischen Übersetzers mit einer an einem der Übersetzerkolben aufgenommenen federbeaufschlagten Steuerraumhülse.

Die in Figur 2 dargestellte Ausführungsvariante eines Kraftstoffinjektors 1 umfasst den den ersten Übersetzerkolben 20 und den zweiten Kolbenteil 23 aufweisenden Druckübersetzer 2. Der Druckübersetzer 2 wird analog zur in Figur 1 dargestellten Ausführungsvariante über einen in einem mit Systemdruck beaufschlagten Hohlraum 4 angeordneten Aktor 5 betätigt. Bei dem Aktor 5 handelt es sich bevorzugt um einen Piezoaktor, der Piezokristalle in Stapelform enthält. Bei Bestromung der Piezokristalle des Aktors 5 ändern die in Stapelanordnung aufgenommenen Piezokristalle ihre Längsausdehnung. Dadurch wird der hydraulische Druckübersetzer 2 betätigt.

Vom mit unter Systemdruck stehenden Kraftstoff 7 beaufschlagten Hohlraum 4 erstreckt sich ein Düsenzulauf 9 zu einem Düsenraum 10. Der Düsenraum 10 umschließt das Einspritzventilglied 11; vom Düsenraum 10 zweigt ein Ringspalt 13 zu in Figur 2 nicht dargestellten Einspritzöffnungen ab, über welche bei geöffnetem Einspritzventilglied 11 Kraftstoff in den Brennraum einer Verbrennungskraftmaschine eingespritzt werden kann. Im Bereich des Düsenraumes 10 ist am Einspritzventilglied 11 eine Druckstufe 12 ausgebildet, an welcher bei Druckbeaufschlagung des Düsenraumes 10 eine in Öffnungsrichtung des Einspritzventilgliedes 11 angreifende Kraft erzeugt wird.

Der erste Übersetzerkolben 20, dessen erste Stirnfläche 21 durch die Stirnseite 8 des Aktors 5 beaufschlagt wird, ist auf einem Kolbenteil 23 eines Einspritzventilgliedes 11 oder einer Druckstange 35 zentriert. Zwischen dem ersten Übersetzerkolben 20 und dem Kolbenteil 23 ist ein erster Steuerraum 24 ausgebildet, der über einen Durchgangskanal 26 mit dem zweiten Steuerraum 27 in Verbindung steht. Der Durchgangskanal 26 mündet einerseits in der Stirnfläche 25 des Kolbenteils 23 und andererseits im Bereich des zweiten Steuerraumes 27 in der Mantelfläche des Kolbenteils 23. Durch den Durchgangskanal 26 sind der erste Steuerraum 24 sowie der zweite Steuerraum 27 hydraulisch miteinander verbunden. Das Kolbenteil 23, dessen Stirnfläche 25 den ersten Steuerraum 24 begrenzt, kann unmittelbar am Einspritzventilglied 11 ausgebildet sein, oder auch an einer das Einspritzventilglied 11 betätigenden Druckstange 35 ausgebildet sein.

Im Unterschied zur in Figur 1 dargestellten Ausführungsvariante ist am ersten, glockenförmig ausbildbaren Übersetzerkolben 20 eine Steuerraumhülse 33 aufgenommen. Die Steuerraumhülse 33 wird durch eine Feder 32 beaufschlagt. Die Feder 32 stützt sich an einer am ersten Übersetzerkolben 20 ausgebildeten Ringfläche 31 ab und beaufschlagt die obere Stirnseite der Steuerraumhülse 33. Die dieser gegenüberliegende Seite der Steuerraumhülse 33 ist als Beißkante 34 ausgebildet. Über die Feder 32 ist sichergestellt, dass die Beißkante 34 der Steuerraumhülse 33 stets dichtend an die Bodenfläche 29 des zweiten Steuerraumes 27 angestellt ist und den im zweiten Steuerraum 27 herrschenden, vom Systemdruck verschiedenen Druck, gegen das Systemdruckniveau abdichtet. Der erste Übersetzerkolben 20 ist entlang einer Führung 36 relativ zur Steuerraumhülse 33 beaufschlagbar, die aufgrund der Beaufschlagung durch das Federelement 32 stets an die Bodenfläche 29 des Gehäuses 3 des Kraftstoffinjektors 1 angestellt bleibt, so dass der zweite Steuerraum 27 stets abgedichtet ist.

Bei Bestromung des Aktors 5 erfahren dessen Piezokristalle eine Längenänderung, so dass der erste Übersetzerkolben 20 in Schließrichtung des Einspritzventilgliedes 11 beziehungsweise der Druckstange 35 gedrückt wird. Aufgrund dessen steigt im ersten Steuerraum 24 das Druckniveau an, welches - bedingt durch den Durchgangskanal 26 im Kolbenteil 23 des Einspritzventilgliedes 11 beziehungsweise der Druckstange 35 - auch im zweiten Steuerraum 27 ansteht. Der zweite Steuerraum 27 ist gegen das Systemdruckniveau über die Steuerraumhülse 33 mit Beißkante 34 abgedichtet. Bei Bestromung des Aktors 5 ist der hydraulische Druckübersetzer 2 aktiviert und wirkt in Schließrichtung auf den Kolbenteil 23 und damit in Schließrichtung auf ein Einspritzventilglied 11 beziehungsweise eine ein Einspritzventilglied 11 beaufschlagende Druckstange 35. Dadurch ist das Einspritzventilglied 11 in seinen brennraumseitigen Sitz gestellt, der in der Darstellung gemäß Figur 2 nicht wiedergegeben ist. Die in den Brennraum der Verbrennungskraftmaschine mündenden Einspritzöffnungen sind verschlossen, so dass diesen über den Ringspalt 13 vom Düsenraum 10 kein Kraftstoff zuströmen kann.

Wird hingegen die Bestromung des Aktors 5 aufgehoben, so nehmen die einzelnen Piezokristalle des im Aktor 5 aufgenommenen Piezokristallstapels wieder ihre ursprüngliche Länge an. Dadurch wird die erste Stirnfläche 21 des glockenförmig ausbildbaren Übersetzerkolbens 20 entlastet, so dass dieser nach oben auffährt. Durch die Auffahrbewegung des Übersetzerkolbens 20 in vertikale Richtung nach oben wird einerseits der erste Steuerraum 24 druckentlastet, andererseits fährt auch die an der Unterseite des Übersetzerkolbens 20 ausgebildete zweite ringförmige Stirnfläche 28 des Übersetzerkolbens 20 aus dem zweiten Steuerraum 27 aus, so dass dieser ebenfalls druckentlastet wird. Aufgrund des Verbindungskanals 26, welcher den Kolbenteil 23 des Einspritzventilgliedes 11 beziehungsweise der Druckstange 35 durchzieht, ist das Druckniveau im ersten Steuerraum 24 und dem zweiten Steuerraum 27 identisch. Aufgrund der Druckentlastung der Stirnfläche 25 des Kolbenteils 23 - entweder eines Einspritzventilgliedes 11 oder einer Druckstange 35 - und der Druckbeaufschlagung des Düsenraumes 10 mit unter Systemdruck stehenden Kraftstoff, stellt sich an der Druckstufe 12 eine in Öffnungsrichtung wirkende hydraulisch erzeugte Öffnungskraft ein. Da sowohl der erste Steuerraum 24 als auch der zweite Steuerraum 27 bei Aufhebung der Bestromung des Aktors 5 druckentlastet sind, übersteigt die an der Druckstufe 12 angreifende, in Öffnungsrichtung des Einspritzventilgliedes 11 wirkende Kraft die Schließkraft. Demzufolge fährt das Einspritzventilglied 11 aus seinem in Figur 2 nicht dargestellten brennraumseitigen Sitz aus und gibt die Einspritzöffnungen 5 (vgl. Position 15 in Figur 1) in den Brennraum der Verbrennungskraftmaschine frei.

Auch die in Figur 2 dargestellte Ausführungsvariante des der vorliegenden Erfindung zugrundeliegenden Gedankens zeichnet sich dadurch aus, dass ein sehr kompaktbauender Kraftstoffinjektor 1 bereitgestellt werden kann, der einen selbstzentrierenden Aufbau des Übersetzerkolbens 20 und eines Kolbenteils 23 eines Druckübersetzers 2 aufweist. Mit den in den Figuren 1 und 2 dargestellten Ausführungsvarianten eines Druckübersetzers 2 kann insbesondere der Druckübersetzer 2 eines Kraftstoffinjektors 1 zur direkten Ansteuerung eines Einspritzventilgliedes 11 eingesetzt werden. Gemäß der in Figur 1 dargestellten Ausführungsvariante erfolgt die Führung des Druckübersetzers 2 über den Führungsabschnitt 22, in welchem der Übersetzerkolben 20 im Gehäuse 3 geführt ist; in der in Figur 2 dargestellten Ausführungsvariante des der Erfindung zugrundeliegenden Gedankens erfolgt die Führung des Übersetzerkolbens 20 des Druckübersetzers 2 über die mit ihrer Beißkante 34 an der Bodenfläche 29 aufgenommene Steuerraumhülse 33.

Hervorstechendes Merkmal beider Ausführungsvarianten ist die extrem kompaktbauende Baugröße.

### Bezugszeichenliste

- 1: Kraftstoffinjektor
- 2: Druckübersetzer
- 3: Gehäuse
- 4: Hohlraum
- 5: Aktor
- 6: Zulauf (Systemdruck)
- 7: Kraftstoff
- 8: Stirnfläche Aktor
- 9: Düsenzulauf
- 10: Düsenraum
- 11: Einspritzventilglied
- 12: Druckstufe
- 13: Ringspalt
- 14: brennraumseitiger Sitz
- 15: Einspritzöffnung

- 20: Übersetzerkolben
- 21: erste Stirnfläche Übersetzerkolben
- 22: Führungsabschnitt
- 23: Kolbenteil Einspritzventilglied 11
- 24: erster Steuerraum
- 25: Stirnfläche Kolbenteil 23
- 26: Verbindungskanal
- 27: zweiter Steuerraum
- 28: zweite Stirnfläche Kolbenteil 23
- 29: Bodenfläche zweiter Steuerraum 27
- 30: Einspritzöffnung
- 31: Ringfläche Übersetzerkolben
- 32: Federelement
- 33: Steuerraumhülse
- 34: Beißkante
- 35: Druckstange
- 36: Führungsabschnitt Steuerraumhülse

## Patentansprüche

1. Kraftstoffinjektor für ein Hochdruckspeichereinspritzsystem mit einem Druckübersetzer (2), der einen Übersetzerkolben (20) enthält, der über einen Aktor (5) betätigt wird, und mit einem Einspritzventilglied (11), welches von einem Düsenraum (10) umschlossen und mit unter Systemdruck stehenden Kraftstoff beaufschlagt ist, wobei das Einspritzventilglied (11) über den Druckübersetzer (2) betätigt wird, wobei der Übersetzerkolben (20) auf einem Kolbenteil (23) des Einspritzventilgliedes (11) oder einer Druckstange (35) zentriert ist, und wobei der Druckübersetzer (2) einen ersten Steuerraum (24) und einen zweiten Steuerraum (27) umfasst, **dadurch gekennzeichnet, dass** der erste Steuerraum (24) und der zweite Steuerraum (27) über einen im Kolbenteil (23) ausgebildeten Verbindungskanal (26) verbunden sind.

2. Kraftstoffinjektor gemäß Anspruch 1, **dadurch gekennzeichnet, dass** eine Seite des Übersetzerkolbens (20) mit einem Fußbereich des Aktors (5) verbunden ist.

3. Kraftstoffinjektor gemäß Anspruch 1, **dadurch gekennzeichnet, dass** der Aktor (5) in einen mit Systemdruck beaufschlagten Hohlraum (4) des Gehäuses (3) des Kraftstoffinjektors (1) aufgenommen ist.

4. Kraftstoffinjektor gemäß Anspruch 1, **dadurch gekennzeichnet, dass** der Übersetzerkolben (20) in einem Führungsabschnitt (22) des Gehäuses (3) geführt ist.

5. Kraftstoffinjektor gemäß Anspruch 1, **dadurch gekennzeichnet, dass** am Mantel des Übersetzerkolbens (20) eine federbeaufschlagte Steuerraumhülse (33) aufgenommen ist, die den zweiten Steuerraum (27) gegen Systemdruck abdichtet.

6. Kraftstoffinjektor gemäß Anspruch 5, **dadurch gekennzeichnet, dass** die Steuerraumhülse (33) eine Beißkante (34) aufweist, die an eine den zweiten Steuerraum (27) begrenzende Bodenfläche (29) angestellt ist.

7. Kraftstoffinjektor gemäß Anspruch 5, **dadurch gekennzeichnet, dass** der zweite Steuerraum (27) durch eine zweite Stirnfläche (28) des Übersetzerkolbens (20), die Steuerraumhülse (33) und eine Bodenfläche (29) des Gehäuses (3) begrenzt ist.

## Claims

1. Fuel injector for a high-pressure accumulator injection system, with a pressure intensifier (2) containing an intensifier piston (20) which is actuated via an actuator (5), and with an injection-valve member (11) which is surrounded by a nozzle space (10) and is acted upon by fuel which is under system pressure, the injection-valve member (11) being actuated via the pressure intensifier (2), the intensifier piston (20) being centred on a piston part (23) of the injection-valve member (11) or a push rod (35), and a pressure intensifier (2) comprising a first control space (24) and a second control space (27), **characterized in that** the first control space (24) and the second control space (27) are connected via a connecting duct (26) formed in the piston part (23).

2. Fuel injector according to Claim 1, **characterized in that** one side of the intensifier piston (20) is connected to a foot region of the actuator (5).

3. Fuel injector according to Claim 1, **characterized in that** the actuator (5) is received in a cavity (4) of the housing (3) of the fuel injector (1), the said cavity being acted upon by system pressure.

4. Fuel injector according to Claim 1, **characterized in that** the intensifier piston (20) is guided in a guide portion (22) of the housing (3).

5. Fuel injector according to Claim 1, **characterized in that** the casing of the intensifier piston (20) receives a spring-loaded control-space sleeve (33) which seals off the second control space (27) against system pressure.

6. Fuel injector according to Claim 5, **characterized in that** the control-space sleeve (33) has a biting edge (34) which is set against a bottom face (29) delimiting the second control space (27).

7. Fuel injector according to Claim 5, **characterized in that** the second control space (27) is delimited by a second end face (28) of the intensifier piston (20), by the control-space sleeve (33) and by a bottom face (29) of the housing (3).

## Revendications

1. Injecteur de carburant pour un système d'injection à accumulateur haute pression comportant un démultiplicateur de pression (2) qui contient un piston de démultiplication (20) actionné par un actionneur (5), et un organe d'injecteur (11) entouré par une chambre d'injection (10) et alimenté en carburant soumis à une pression système, l'organe d'injecteur (11) étant actionné par l'intermédiaire du démultiplicateur de pression (2), le piston de démultiplication (20) étant centré sur une partie (23) du piston de l'organe d'injecteur (11) ou d'une tige de poussoir (35), et le démultiplicateur de pression (2) renfermant une première chambre de commande (24) et une deuxième chambre de commande (27),
**caractérisé en ce que**
la première chambre de commande (24) et la deuxième chambre de commande (27) sont reliées par un canal de liaison (26) situé dans la partie (23) du piston.

2. Injecteur de carburant selon la revendication 1,
**caractérisé en ce qu'**
un côté du piston de démultiplication (20) est relié à une zone inférieure de l'actionneur (5).

3. Injecteur de carburant selon la revendication 1,
**caractérisé en ce que**
l'actionneur (5) est logé dans un espace creux (4), alimenté en pression système, du boîtier (3) de l'injecteur de carburant (1).

4. Injecteur de carburant selon la revendication 1,
**caractérisé en ce que**
le piston de démultiplication (20) passe dans un segment de guidage (22) du boîtier (3).

5. Injecteur de carburant selon la revendication 1,
**caractérisé en ce que**,
sur la chemise du piston de démultiplication (20) est logé sur ressorts un manchon (33) de la chambre de commande, lequel manchon rend la deuxième chambre de commande (27) hermétique à la pression système.

6. Injecteur de carburant selon la revendication 5,
**caractérisé en ce que**
le manchon (33) de la chambre de commande présente une arête mordante (34) placée contre une surface (29) délimitant la deuxième chambre de commande (27).

7. Injecteur de carburant selon la revendication 5,
**caractérisé en ce que**
la deuxième chambre de commande (27) est délimitée par une deuxième face avant (28) du piston de démultiplication (20), le manchon (33) de la chambre de commande, et une surface (29) du boîtier (3).
